# EUROPEAN PATENT SPECIFICATION

(11) **EP 2 898 625 B1**
(45) Date of publication and mention of the grant of the patent: **17.07.2019**
(21) Application number: 13839619.7
(22) Date of filing: 18.09.2013
(51) Int. Cl.: H04L 9/08, H04L 29/06, G06Q 30/02, H04W 12/08

(54) **CONTEXT AWARE CONTENT DISTRIBUTION**
KONTEXTBEWUSSTE INHALTSVERTEILUNG
DISTRIBUTION DE CONTENU CONSCIENTE DU CONTEXTE

(30) Priority: 21.09.2012 US 201213624223
(43) Date of publication of application: 29.07.2015
(73) Proprietor: Amazon Technologies, Inc., Reno, NV 89507 (US)
(72) Inventor: LERNER, David M., Seattle, Washington 98109-5210 (US); DUCROU, Jon Robert, Seattle, Washington 98109-5210 (US); BARRY, Marcus A., Seattle, Washington 98109-5210 (US); SANDERS, II, Kenneth O., Seattle, Washington 98109-5210 (US); MILLER, Erik J., Seattle, Washington 98109-5210 (US); BRENNAN, Christopher M., Seattle, Washington 98109-5210 (US); SMITH, Brandon J., Seattle, Washington 98109-5210 (US)
(74) Representative: Bittner, Thomas L.
(86) International application number: PCT/US2013/060384
(87) International publication number: WO 2014/047165

(56) References cited:
- US-A1- 2003 070 070
- US-A1- 2003 140 241
- US-A1- 2009 214 036
- US-A1- 2010 169 641
- US-A1- 2011 238 476
- US-A1- 2012 054 180
- US-B1- 6 389 541
- US-B2- 7 092 943

## Description

### BACKGROUND

Content such as electronic books ("e-books"), presentations, audio, video, applications, web pages, and so forth are consumed by users in environments such as schools, businesses, tradeshows, and shopping malls. Traditionally content has been distributed in ways which require a user to undergo relatively complicated procedures to access the content. These procedures make it difficult for organizations to distribute the content they would like to provide to users, and may result in user dissatisfaction. Document US 2012/0054180 A1 discloses a computer-implemented method for content delivery in a computerized system. Invitational content targeted to a particular behavior can be served to the user when the user is likely to reproduce a desired behavior. The user is classified into one or more spatial-temporal segments based on an analysis of the user's characteristics and the user's past behavior. When a request is made for an item of invitational content, a spatial-temporal segment is selected based on a substantial likelihood that the current context will lead to a repeat of the representative past behavior. An item of invitational content associated with the selected segment is then served to the user. Document US 2011/0238476 A1 refers to techniques for providing electronic coupons to users of mobile devices. The coupons may be redeemable at certain merchant locations and at certain times. Users may actively select coupons they wish to access from a mobile device. Alternatively, the users may opt in to a system that automatically presents potentially relevant coupons. The relevance of the coupons may be determined based on the distance of the mobile device from a merchant location and/or a time period during which the coupon is valid. The users may activate coupons by logging into a remote computing system from their respective mobile devices. Activated coupons may be transmitted as an electronic signal from a mobile device to a merchant computing device. Alternatively, a display screen of a mobile device may show a barcode or image of the coupon that is read by a machine or employee of the merchant.

### BRIEF DESCRIPTION OF THE DRAWINGS

FIG. 1 illustrates a system for providing invitations to establish trust relationships for the distribution of content based at least in part on context of a user device.
FIG. 2 illustrates trust relationships which may exist between a user device, a trust provider, and a content provider.
FIG. 3 illustrates events involved in establishing a device-content provider trust relationship between the user device and the content provider by way of the trust provider
FIG. 4 illustrates a block diagram of the context data.
FIG. 5 illustrates a block diagram of invitation data which may be provided based at least in part on the context data.
FIG. 6 illustrates a block diagram of the user device configured to provide content to the user based at least in part on acceptance of an invitation.
FIG. 7 is an illustrative user interface presented on the user device allowing management of invitations.
FIG. 8 illustrates a block diagram of a trust provider server configured to determine context based at least in part on the context data, provide invitations, and establish a trust relationship between the user device and the content provider.
FIG. 9 illustrates a block diagram of a content provider server configured to use the trust relationship between the user device and the content provider to provide content to the user device based at least in part on one or more content management parameters.
FIG. 10 illustrates a block diagram of the content management parameters.
FIG. 11 illustrates, a flow diagram of a process of providing an invitation based at least in part on the context data and establishing a device-content provider trust relationship based at least in part on acceptance of that invitation.
FIG. 12 illustrates a flow diagram of a process of providing content to the user device based at least in part on the device-content provider trust relationship.

Certain implementations will now be described more fully below with reference to the accompanying drawings, in which various implementations and/or aspects are shown. However, various aspects may be implemented in many different forms and should not be construed as limited to the implementations set forth herein, Like numbers refer to like, elements throughout.

### DETAILED DESCRIPTION

Content such as e-books, presentations, audio, video, applications, web pages, and so forth are consumed by users in environments such as schools, businesses, tradeshows, and shopping malls. To access this content, users traditionally have to take several affirmative steps which can result in an adverse user experience. For example, a tradeshow may have thousands of participants. Content such as conference schedules, convention center maps, seminar materials, and so forth may be available in hardcopy for physical handout, on a memory stick, and so forth. Accessing this content thus requires either carrying paper, finding a device which can access the memory stick and transferring the contents, or taking other steps such as directing users to a web site to download content. These steps may be frustrating to the user who simply wants to be able to consume the content with little or no hassle.

Providing this content may also be difficult or expensive for the content provider trying to disseminate the content Continuing the example, the content provider for the tradeshow would have to manage the logistics of printing thousands of hardcopies, writing data to thousands of memory sticks, and delivering these items. Providing data on the web site may alleviate the delivery logistics, but users may still require multiple steps, logins, selections, technical assistance, and so forth to access the content.

This disclosure describes systems and methods for distributing content from a content provider to a user device as facilitated by a trust provider. Content may include, but is not limited to, electronic books ("e-books"), presentations, audio, video, applications, or web pages.

A trust provider such as a merchant, bank, user device administrator, or other entity establishes a device trust relationship with one or more user devices. For example, a merchant who sells an e-book reader device to a user creates a device trust relationship between the user device (and the user) and the merchant who may act as the trust provider. The trust provider may also establish a content trust relationship with a content provider. For example, the content provider may affiliate with the merchant acting as a trust provider to advertise content. As a result, the trust provider trusts the user device and trusts the content provider. In some implementations, the trust provider and the content provider may be the same, such as when the merchant sells the e-book reader devices and provides content to them.

The trust provider may acquire context data about the user device. The context data describes the environment or setting in which the user device exists. The context data may include one or more of the geographic location, relative location, detected adjacent devices, calendar data, user input, and so forth. For example, the context data may comprise the geographic location of the user device and the presence of other user devices. Based at least in part on this context data, the trust provider may provide an invitation to the user device. Upon acceptance of the invitation, the trust server establishes a device-content provider trust relationship between the user device and the content provider. Once established, the user device or a network storage location accessible to the user device may be configured to accept content from the now trustworthy content provider.

The content distributed to the user device may be done so with one or more content management parameters. These content management parameters allow the content provider to control access to the content. For example, content management parameters may permit access to a particular technical paper while users are physically present in a particular convention hall.

The user device may also be configured to allow the user to manage the invitations and associated trust relationships. For example, the user may choose to discontinue receiving content associated with an invitation associated with in-store retail coupons.

The systems and methods described herein may be configured to improve the user experience and access to content by simplifying the user's interaction in content distribution. Returning to the example above, a user entering the tradeshow receives on their user device an invitation to receive content such as conference schedules, convention center maps, seminar materials, and so forth. Once accepted, without further intervention by the user the content is made accessible to the user's device for consumption. As a result, the overall user experience is improved and the content is distributed.

This object is solved by a method having the features of claim 1 and by a computer-readable medium having the features of claim 15. Advantageous embodiments thereof are defined in the respective dependent claims.

### ILLUSTRATIVE SYSTEM

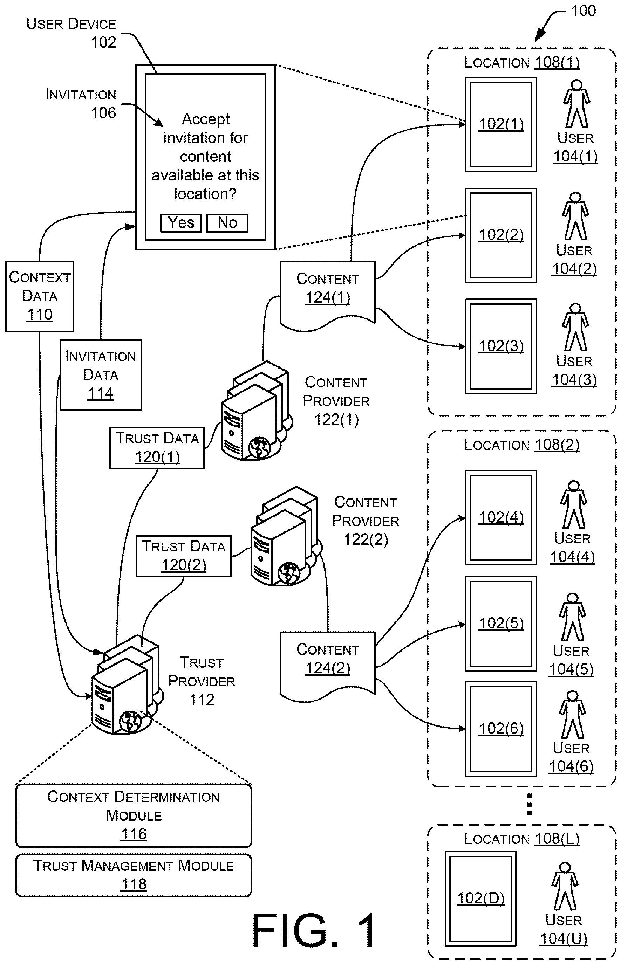

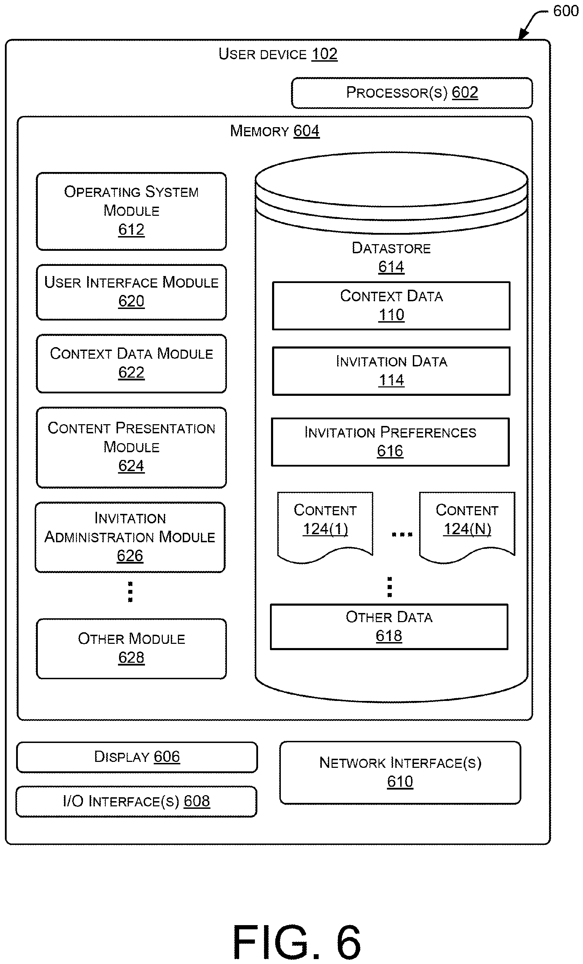

FIG. 1 illustrates a system 100 for providing invitations to establish trust relationships for the distribution of content. One or more user devices 102(1), 102(2), ... 102(D) may be used by one or more users 104(1), 104(2), ... 104(U). As used herein, letters enclosed by parenthesis such as "(D)" or "(U)" indicate an integer having a value greater than zero. The user devices 102 may include a smartphone, a laptop computer, a desktop computer, a tablet computer, portable media player, game consoles, and so forth. The user device 102 may be configured to present an invitation 106 to the user 104. The invitation 106 presents to the user an opportunity to receive or send content with another device. The user device 102 is described in more detail below with regard to FIG. 6.

The user device 102 may be portable and be movable between one or more locations 108(1), 108(2), ..., 108(L). These locations may be geographic or relative. A geographic location is one which is specified by particular coordinates on the Earth. For example, the location 108(1) may describe a geographic location of a convention center at a particular street address in San Jose. A relative location is one which refers to something other than geographic coordinates. The relative location may comprise a description or function of a room or facility. For example, the relative location may be "kitchen," "office," or "convention center."

The relative location may be based on proximity of other user devices 102 or users 104. For example, a relative location of "meeting" may be associated with two or more user devices 102 being near one another. This relative location of "meeting" may itself be in motion, such as when the two or more user devices 102 are being used by the users 104 on an aircraft in night.

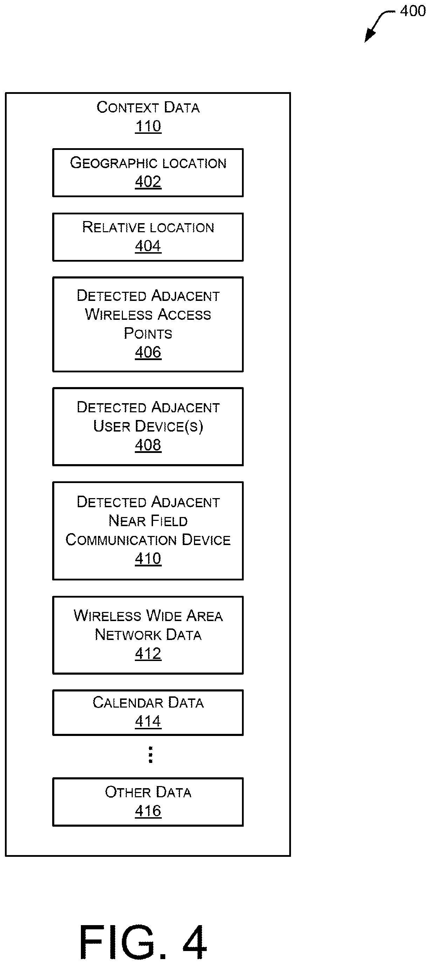

The user device 102 may provide context data 110 to a trust provider 112. The context data 110 provides information about the location of the user device 102, presence of other devices such as user devices, and so forth. The context data 110 is described in more detail below with regard to FIG. 4.

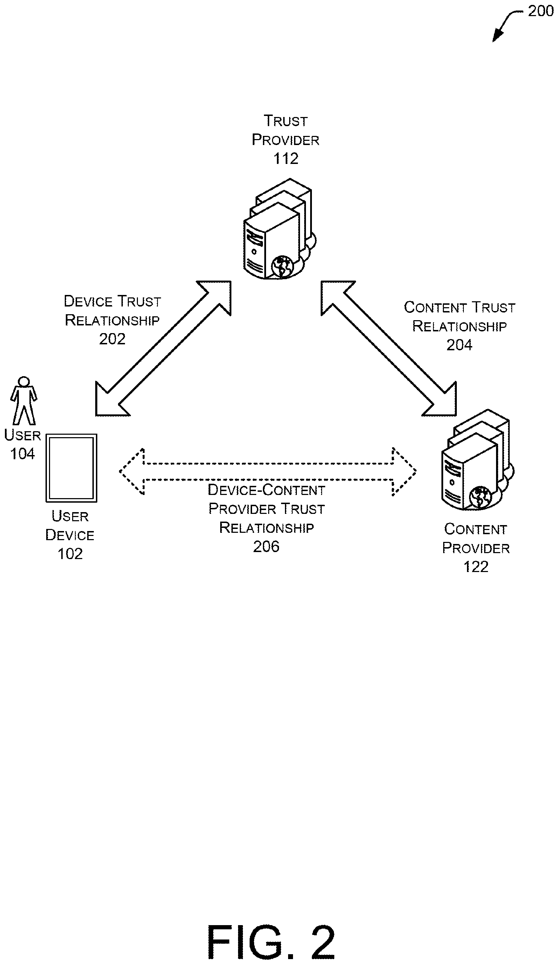

The trust provider 112 maintains a trust relationship with the user device 102. This trust relationship may be based on identification, payment information, authentication, and so forth. The trust provider 112 may be a merchant responsible for administering or providing a service to the user device 102 or an application executing on the user device 102. For example, where the user device 102 is an e-book reader the trust provider 112 may be the merchant selling the e-Book reader devices. The various trust relationships are described below in more detail with regard to FIG. 2.

The trust provider 112 may provide invitation data 114 to the user device 102 using a context determination module 116 and a trust management module 118. The context determination module 116 processes the context data 110 and determines the context of the user device 102. The context of the user device 102 describes the environment or setting in which the user device 102 exists, For example, the context includes the location and presence of other user devices 102. The trust management module 18 determines, based at least in part on the context data 110, what invitation data 114 to send to the user device 102.

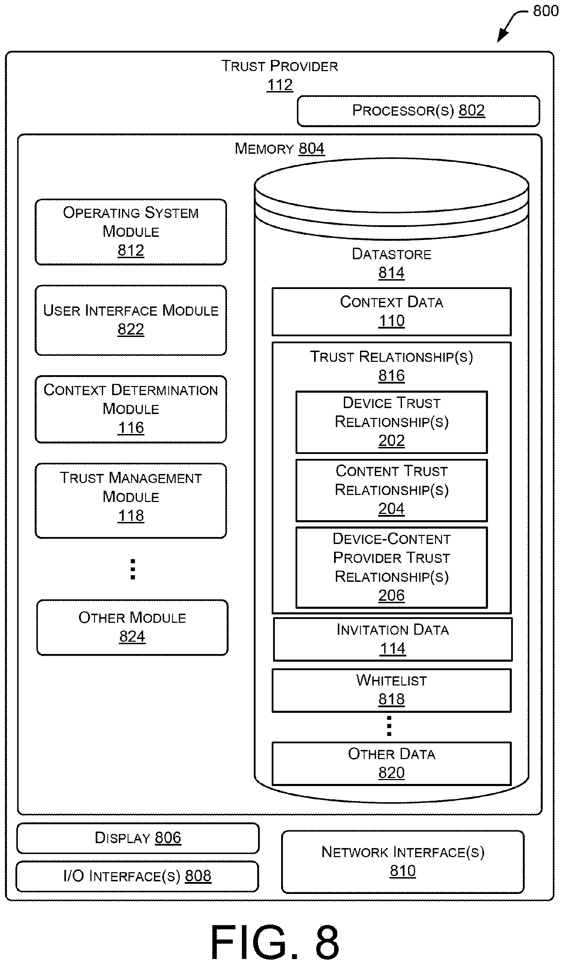

The invitation data 114 provides information indicative of content which may be provided to the user device 102. Particular invitation data 114 may be associated with one or more of the locations 108(1). For example, the location 108(1) may comprise a convention center at which a tradeshow is taking place. Invitation data 114(1) may describe content available for users 104 at the tradeshow which is accessible to the user device 102. The context determination module 116 and the trust management module 118 may determine that, based at least in part on the context data 110, the user device 102 is at the location 108(1) with the tradeshow and provide the invitation data 114(1) to the user device 102(1). For ease of illustration and not by way of limitation a single trust provider 112 is depicted here. The trust provider 112 is described below in more detail with regard to FIG. 8.

Based on the invitation data 114 receives from the trust provider 112, the user device 102 may present the invitation 106 for the user to accept. Continuing the example, the user 104(1) sees the invitation to receive content for the tradeshow and accepts the invitation. The trust provider 112 receives the acceptance and, based at least in part on the acceptance, the trust management module 118 generates trust data 120 which is provided to a content provider 122.

The trust provider 112 maintains a trust relationship with the content provider 122. This trust relationship may be based on identification, payment information, authentication, and so forth. The trust provider 112 may be a merchant responsible for administering or providing a service to the content provider 122. For example, the content provider 122 may use the trust provider 112 to handle trust provisioning with the user devices 102. In some implementations, the trust provider 112 may also act as the content provider 122.

The trust data 120 received by the content provider 122 provides an indication of the acceptance by the user device 102 of the invitation 106 to receive content at the user device 102. The trust data 120 may include one or more of a user device identifier, a user identifier, device connection information, indication of a level of trust to be allocated, communication settings, and so forth. For example, the trust data 120 may provide a device identifier for the user device 102(1) and include communication settings indicating the current network address and security settings for use in establishing communication between the content provider 122 and the user device 102.

The content, provider 122 receives the trust data 120. Based at least in part on the trust data 120, the content provider 122 may provide the content 124 to the one or more user devices 102. In some implementations, the invitation data 114 may include information indicative to provide access to the content 124. For example, the invitation data 114 may include a uniform resource identifier, uniform resource location, network address, link, and so forth which may be processed by the user device 102 to initiate transfer of, or access to, the content 124.

As described above, the content 124 may include e-books, presentations, audio, video, applications, web pages, and so forth. Continuing the example, following the acceptance of the invitation data 114(1), the content provider 122(1) provides the content 124(1) such as advertisements for particular services offered at the tradeshow to the user device 102(1). The content provider 122 may be an owner, distributor, licensee, and so forth. For example, the content provider 122 may be a service provider configured to distribute the content 124 according to access rights licensed from a content owner.

In another implementation, the content provider 122 may be configured to provide access or use credentials to the user device 102 which already has content 124 stored. For example, the content 124 may be pre-loaded on the user device 102 which requires a digital rights management key to access. The content provider 122 may provide this key to a trusted user device 102, allowing the user 104 to consume the content 124.

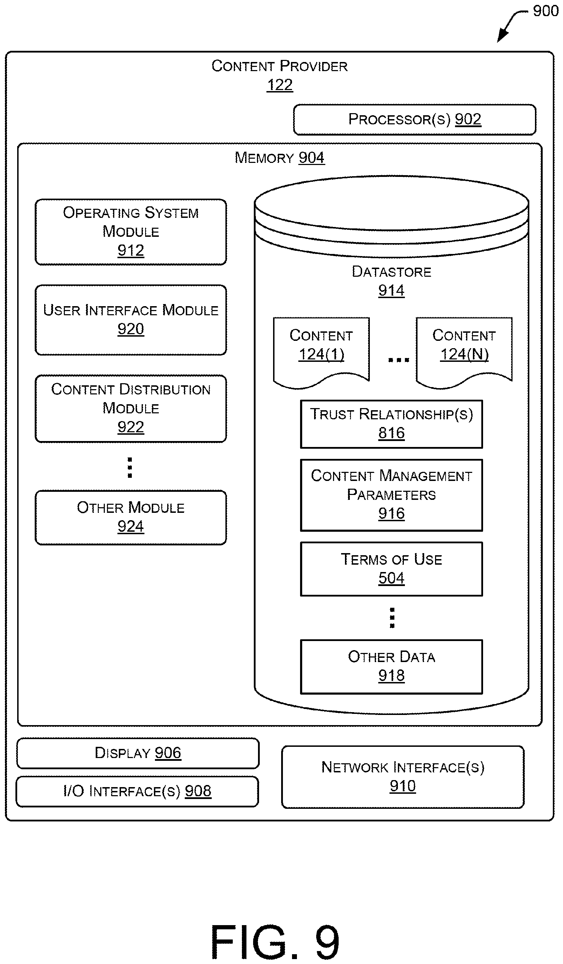

For ease of illustration and not by way of limitation two content providers 122(1) and 122(2) are depicted here. Other content providers 122(3), ..., 122(P) may also be present. The content provider 122 is described below in more detail with regard to FIG. 9. In some implementations the trust provider 112 and the content provider 122 may be consolidated into a single entity, server, or both. For example, the trust provider 112 may also act as a content provider 122 and vice versa.

One or more networks may couple the user devices 102 with one or more trust providers 112, content providers 122, and other devices. The networks may comprise one or more private networks, public networks such as the Internet, or a combination of both configured to transfer data between two or more devices. For example, the context data 110 may be sent from the user device 102 to the trust provider 112 using a wireless wide area network ("WWAN") while the invitation data 114 and the content 124 are sent using a wireless location area network.

FIG. 2 illustrates trust relationships 200 which may exist between the user device 102, the trust provider 112, and the content provider 122. As described above, the trust relationships may be based on identification, payment information, authentication, and so forth. A trust relationship exists between trusted parties. As a result of this trust relationship, certain privileges may be extended between the trusted parties. These privileges may include exchanging data without additional validation, accepting credentials without additional checking, and so forth. For example, where the user device 102 is authenticated with the trust provider 112, the trust provider 112 has a level of assurance about data received from the user device 102. For ease of illustration and not by way of limitation a single user device 102, trust provider 112, and content provider 122 are depicted.

The trust provider 112 maintains a device trust relationship 202 with a particular user device 102, user 104, or combination of user device 102 and user 104. As a consequence of this device trust relationship 202, the trust provider 112 has some level of assurance as to data exchanged with the user device 102 or another device associated with the user 104. For example, when the trust provider 112 provides administrative support to the user device 102, the context data 110 such as location information from an onboard global positioning system ("GPS") receiver may be trusted as in accurate location.

The device trust relationship 202 may be based on identification, payment information, authentication, shipment information, and so forth. For example, prior to shipment of the user device 102. a device identifier may be scanned and stored with the trust provider 112, Upon activation of the user device 102, this particular device identifier may be referenced and the device trust relationship 202 established.

The device trust relationship 202 may extend to a user account for a particular user 104 or several user devices 102 associated with the user account of the particular user 104, For example, the user 104 may register several user devices 102(1)-(5) with the trust provider 112, establishing a trust relationship between the user devices 102(1)-(5) and the trust provider 112

Similarly, a content trust relationship 204 may exist between the trust provider 112 and the content provider 122. The content trust relationship 204 may be based on payment information, exchange of encryption keys, authentication, and so forth. For example, the content provider 122 may pay the trust provider 112 to distribute invitation data 114 on behalf of the content provider 122. Once the content trust relationship 204 is established, the trust provider 112 and the content provider 122 may exchange information with some level of assurance. For example, based at least in part on the content trust relationship 204 the trust provider 112 may accept information from the content provider 122 about content 124 and provide invitations based on the content 124.

The content provider 122 may wish to selectively distribute content 124 to particular user devices 102. Returning to the tradeshow example, the operator of the tradeshow may wish to distribute the schedules and other materials easily to the participants, but avoid distribution to those who did not attend. The trust provider 112, sitting at an intersection of trust between the user device 102 and the content provider 122, acts as a bridge along which trust may be extended. Once this trust is extended, the content provider 122 and the user device 102 may exchange the content 124 or other data with more assurances as to veracity, distribution, and so forth.

As illustrated here, the trust provider 112 may establish a device-content provider trust relationship 206 between the user device 102 and the content provider 122. Based at least in part on the device-content provider trust relationship 206, the content provider 122 has some level of assurance as to where the content 124 is being delivered to. This aids the content provider 122 in having control over .distribution of the content 124 and provides an assurance to the user device 102 as to the source of the content 124. The device-content provider trust relationship 206 may be established between the trust provider 112 and the user 104 or one or more user devices 102 associated with the user 104.

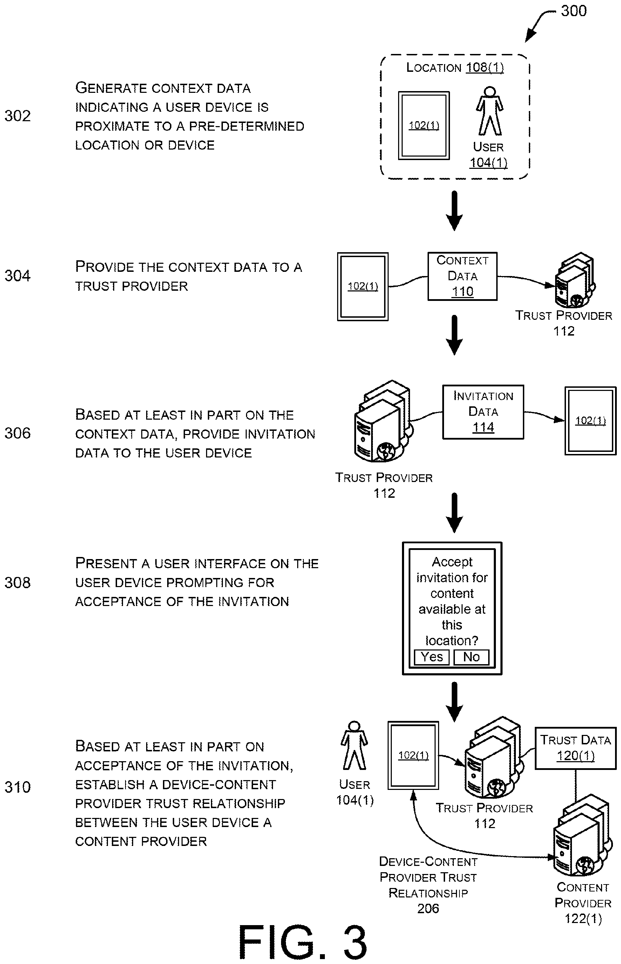

FIG. 3 illustrates events 300 involved in establishing a device-content provider trust relationship between the user device 102 and the content provider 122 by way of the trust provider 112. These events may be performed by one or more of the user device 102, the trust provider 112, or the content provider 122.

At 302, context data 110 is generated indicating the user device 102 is proximate to a pre-determined location or device. For example, the user device 102 may use an onboard global positioning system receiver to determine a geographic location.

At 304, the context data 110 is provided to the trust provider 112. For example, the user device 102 may send the context data 110 over a wireless wide area networking connection. In some implementations the context data 110 may be provided to the trust provider 112 by another source, or be generated by the trust provider 112 itself. For example, a third-party geolocation service or a telecommunications carrier providing the wireless wide area network may provide location information about the user device 1 02 to the trust provider 112.

At 306, based at least in part on the context data 110, the trust provider 112 provides the invitation data 114 to the user device 102. For example, the context determination module 116 may determine that the user device 102 is at the convention center location 108(1) where the tradeshow is taking place. The trust management module 118 may then send the invitation data 114 associated with the tradeshow to the user device 102. As described above, the invitation data 114 may be sent to the user device 102 using the network, such as the Internet.

At 308, the user device 102 presents the invitation 106 in a user interface, prompting the user 104 to accept or decline the invitation. In some implementations the user 104 or an administrator may have configured the user device 102 or the trust server 112 to accept all invitations, reject all invitations, or apply particular rules for acceptance which are applied automatically. The user interface may be a graphical user interface, audible user interface, and so forth.

In some implementations where the invitation 106 calls for payment information, additional secured payment screens may be presented. For example, where the content 124 is available for a fee, a payment user interface may be provided.

At 310, based at least in part on the acceptance of the invitation 106, the trust provider 112 establishes the device-content provider trust relationship 206 between the user device 102 and the content provider 122. As described, once established, the content provider 122 may exchange information such as the content 124 with the user device 102.

FIG. 4 illustrates a block diagram 400 of the context data 110. The following elements of the context data 110 are provided by way of illustration and not as a limitation. The context data 110 may include one or more of the following pieces of information.

A geographic location 402 may be provided to the trust provider 112. The geographic location 402 may be based on information received from a global positioning system receiver, from information provided by wireless network access points, and so forth. In some implementations the user 104 may be permitted to manually enter geographic location 402 data. However, some content providers 122 may choose to disregard this manually entered data, and as a result invitations based on location may not be provided.

Relative location 404 information refers to something other than geographic coordinates. The relative location 404 may be defined by a description or function associated with a location. For example, the relative location 404 may indicate "conference room," "library," or "kitchen." In one implementation the relative location may be based on proximity of other user devices 102 or users 104. For example, a relative location of "meeting" may be associated with two or more user devices 102 being physically near one another, such as in the same room. This relative location of "meeting" may itself be in motion, such as when the two or more user devices 102 are being used by the users 104 on an aircraft in flight

The geographic location 402 and the relative location 404 information may be generated at least in part by the user device 102, or by another device or system. For example, the user device 102 may not include a global positioning system receiver or may be in a location at which GPS signals cannot be reliably received, such as indoors. The geographic location 402 may be determined based on network connectivity, time difference of arrival calculations to various access points with known geographic locations, and so forth. Likewise, the relative location 404 may be inferred when a plurality of the user devices 102 are connected to the same wireless local area network access point.

Information about detected adjacent wireless access points 406 may also be included in the context data 110. This information may be used to infer location as well as proximity to other user devices 1 02. For example, where a wireless access point is part of a wireless local area network ("WLAN"), detection of a beacon from the access point may be indicative of relatively close proximity to the access point hardware. When several user devices 102 report context data 110 including the same detected adjacent wireless access points 406, they may be inferred to within at most several hundred feet of one another.

Similarly, the context data 110 may include detected adjacent user devices 408. For example, the user device 102 may be configured with one or more wireless communication interfaces such as a WLAN, WWAN, or personal area network ("PAN") and may receive data from other compatibly equipped user devices 102. For example, the WLAN interface of the user device 102(1) may detect data packets being transmitted by the user device 102(2). The context data 110 provided by the user device 102(1) may include information such as the media access control address of the user device 102(2).

The detected adjacent user devices 408 may be used to validate the proximity of the user devices 102 to one another. The detected adjacent user device 408 information from several user devices 102 may be compared to reduce improper allocation of trust. For example, the user devices 102(1)-(4) may each provide context data 110 indicating they are at the location 108(1). However, the detected adjacent user device 408 information in the context data 110 from the devices 102(1)-(3) may indicate the presence of one another, but not the user device 102(4). As a result, the trust management module 118 may extend invitations for content 124 associated with the location 108(1) to the user devices 102(1)-(3) and omit the user device 102(4).

The user device 102 may also be configured to generate context data indicating detected adjacent near field communication ("NFC") devices 410. NFC devices are configured to provide exchange of data at extremely close ranges on the order of a few centimeters using radio frequencies. As described above with regard to the detected adjacent wireless access points and user devices 102, detection of an adjacent NFC device 410 may be used to determine the location of the user device 102 or proximity of one user device 102 to another.

The context data 110 may include WWAN data 412. The WWAN data 412 may be provided by the user device 102 or by another device, such as a server maintained by the telecommunication carrier providing the WWAN service.

Calendar data 414 may be included in the context data 110. For example, information from the user's 104 calendar may indicate a particular meeting is scheduled at a particular time. Based at least in part on that information, the context at that particular time may be determined to be "in a meeting."

Other data 416 may be included in the context data 110 such as user input, ambient light levels, data received from an optical transceiver, images acquired by a camera, date and/or time, and so forth. For example, an ambient light sensor may be used to acquire data about ambient light levels. The ambient light level may be used to provide an additional piece of data for comparison to validate the location of the user device 102.

The context determination module 116 may use the context data 110 to determine that the user device 102 is in a particular location, proximate to other user devices 102, and so forth. This information may then be used by the trust management module 118 to determine invitations to provide to the user device 102.

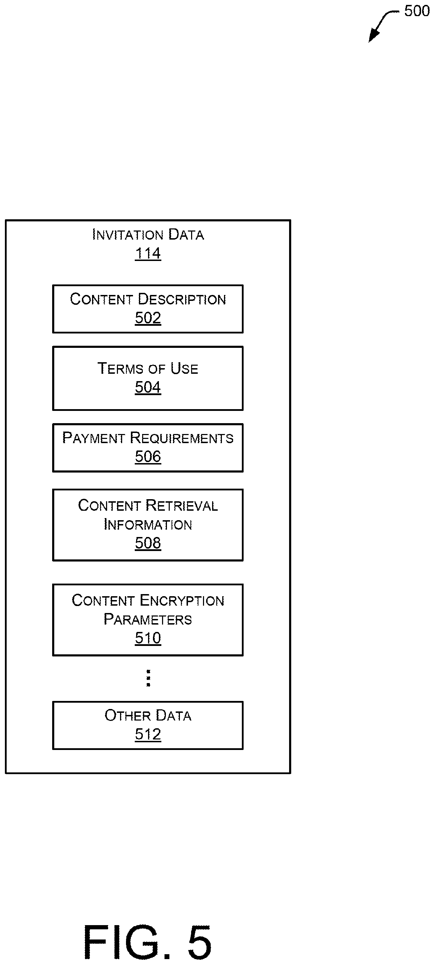

FIG. 5 illustrates a block diagram 500 of the invitation data 114 which may be provided to the user device 102, based at least in part on the context data 110. As described above, the invitation data 114 conveys information about available content which may be presented as the invitation 106 in the user interface of the user device 102.

The invitation data 1 14 may include a content description 502. The content description 502 may include text or other metadata descriptive of the content 124. For example, the content description 502 may indicate the content 124(1) comprises tradeshow schedules and a map of the venue.

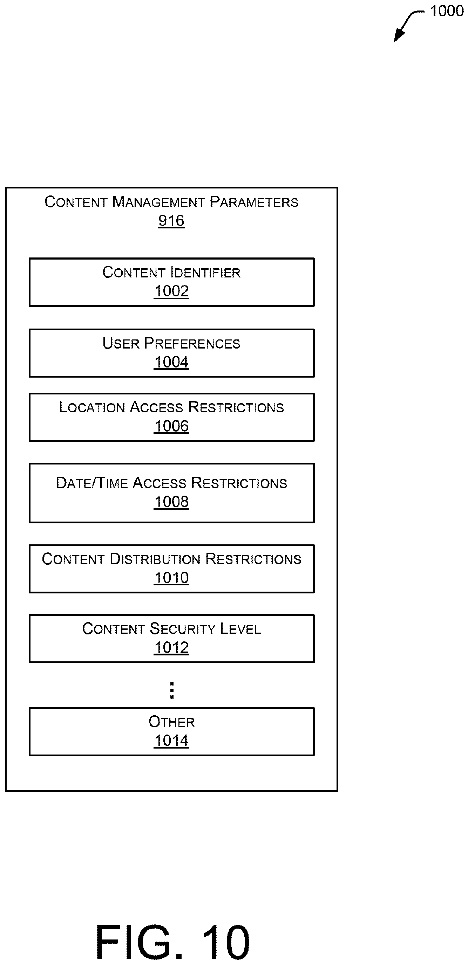

Terms of use 504 may also be provided which provide for some restriction or limitation of the distribution, use, and so forth of the content. For example, technical papers provided at the tradeshow may be restricted to viewing on the user device 102 only. The invitation data 114 may also specify an acceptance mechanism for use in accepting the terms of use 504, such as receiving a signature on a touch sensor, acquiring biometric data, and so forth. In some implementations, the terms of use 504 may be enforced through one or more content management parameters, such as described below with regard to FIGS. 9 and 10.

In some implementations the content 124 may be provided for a fee. The invitation data 114 may include one or more payment requirements 506 to facilitate processing of this fee. For example, the one or more payment requirements 506 may specify a price, currency, and direct the user to a secured application or website for entry of payment information.

The invitation data 114 may include content retrieval information 508. The content retrieval information 508 may include data such as access codes, passwords, network addresses, hyperlinks, and so forth. For example, the content retrieval information 508 may include a hyperlink which, when processed by the user device 102 initiates a transfer of the content 124 to the user device 102.

Content encryption parameters 510 may also be included in the invitation data 114. The content encryption parameters 510 may define encryption algorithms, keys, protocols, and so forth associated with providing the content 124 to the user device 102 for consumption by the user 104.

Other data 512 may be included in the invitation data 114. For example, a list of languages for which the content 124 is available may be provided.

FIG. 6 illustrates a block diagram 600 of the user device 102 configured to provide content 124 to the user 104 based at least in part on acceptance of an invitation 106. The user device 102 may comprise one or more processors 602, one or more memories 604, one or more displays 606, one or more input/output ("I/O") interfaces 608, and one or more network interfaces 610.

The processor 602 may comprise one or more cores and is configured to access and execute at least in part instructions stored in the one or more memories 604. The one or more memories 604 comprise one or more computer-readable storage media ("CRSM"). The one or more memories 604 may include, but are not limited to, random access memory ("RAM"), flash RAM, magnetic media, optical media, and so forth. The one or more memories 604 may be volatile in that information is retained while providing power or non-volatile in that information is retained without providing power.

The display 606 is configured to present visual information to the user 104. In some implementations the display 606 may comprise a reflective display such as an electrophoretic display, a cholesteric display, an interferometric display, and so forth. The one or more I/O interfaces 608 may also be provided in the user device 102. These I/O interfaces 608 allow for coupling devices such as keyboards, external memories, infrared transceivers, microphones, speakers, and so forth to the user device 102.

The one or more network interfaces 610 provide for the transfer of data between the user device 102 and another device, such as via the network 110. The network interfaces 610 may include, but are not limited to, wired local area networks ("LANs"), wireless local area networks ("WLANs"), wireless wide area networks ("WWANs"), personal area networks ("PANs"), and so forth.

The one or more memories 604 may store code or program instructions for execution by the processor 602 to perform certain actions or functions. These instructions may include an operating system module 612 configured to manage hardware resources such as the I/O interfaces 608 and provide various services to applications executing on the processor 602. The one or more memories 604 may also store a datastore 614 containing information about the operating system module 612, context data 110, invitation data 114, content 124, invitation preferences 616, and other data 618. The invitation preferences 616 includes information such as which invitations have been accepted, criteria which, when met, result in automatic acceptance of an invitation, and so forth.

The one or more memories 604 may include a user interface module 620, a context data module 622, a content presentation module 624, an invitation administration module 626, and other modules 628. In some implementations one or more of these modules or their functions may be stored or executed on another device accessible using the network interface 610.

The user interface module 620 is configured to present information to the user 104 and may be configured to accept user input. The user interface module 620 may provide graphical user interfaces, audible user interfaces, and so forth. The user interface module 620 may be configured to process the invitation data 114 and present the invitation 106 to the user. The user interface module 620 may be configured to process the user's 104 acceptance or rejection of the invitation 106 to the trust provider 112.

The context data module 622 is configured to acquire at least a portion of the context data 110. For example, the context data module 622 may be configured to acquire data from one or more devices such as a GPS receiver coupled to the one or more I/O interfaces 608, the network interfaces 610, and so forth. Once acquired, the context data module 622 may provide at least a portion of the context data 110 to the trust provider 112 or another device. In some implementations the context data module 622 may apply some processing, data cleanup, and so forth to reduce the size of the context data 110.

The content presentation module 624 is configured to access the content 124 such as stored in the datastore 614 or on another device and present that content 124 to the user. For example, the content presentation module 624 may comprise a rendering engine configured to process a markup language and provide formatted text on the display 606.

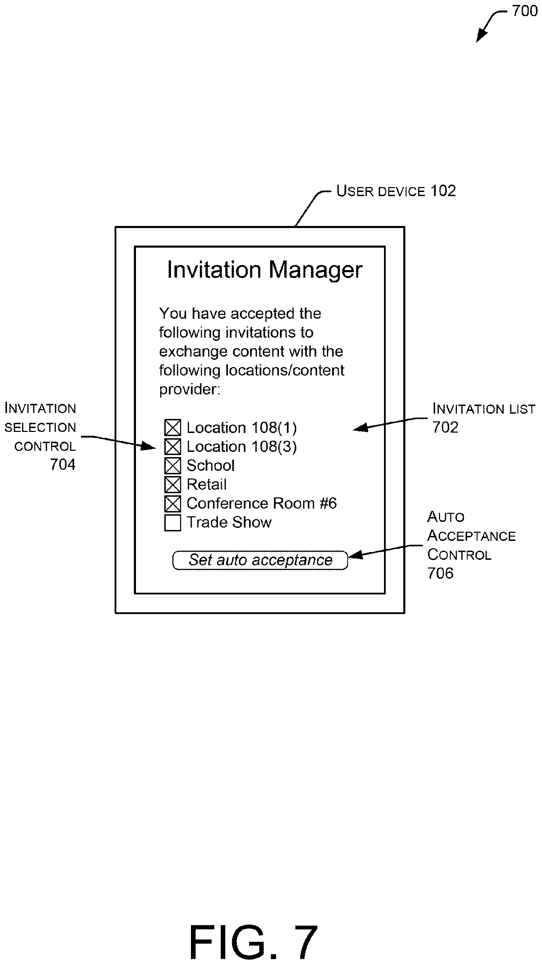

The invitation administration module 626 provides the user 104 with tools to manage the invitations 106. These tools may include various user interfaces allowing the user 104 to change the status of previously accepted or rejected invitations, remove invitations, and so forth. For example, during a holiday weekend the user 104 may choose to accept a previously rejected invitation for coupons for merchants at the location 108(3). An example, of the user interface provided by the invitation administration module 626 is described below with regard to FIG. 7.

The user device 102 may include other modules 628. These other modules 628 may include decryption modules, user authentication modules, and so forth.

FIG. 7 is an illustrative user interface 700 presented on the user device 102 configured to allow management of invitations. The invitation administration module 626 may use this interface 700 to allow the user 102 control over invitations 106 associated with the particular user device 102, the user 104, or both. In some implementations a designated administrator may use a similar interface to control the invitations of other user devices 102, users 104, or both.

Illustrated here is an invitation list 702 presented on the display 606. This invitation list may be based on the invitation data 114 stored in the datastore 614. As described above, the invitation data 114 may be received from the trust provider 112.

One or more invitation selection controls 704 provide the user 102 with the ability to change invitation status. For example, the user 102 may choose to accept an invitation, reject an invitation, delete and invitation, and so forth.

As described above, in some implementations the user 102 may define one or more criteria which, when met, result in automatic acceptance or rejection of invitations 106. An auto acceptance control 706 may be presented in the user interface 700, allowing the user 104 to access and configure this functionality. For example, the user 104 may use the auto acceptance control 706 to automatically accept all invitations associated with educational content.

FIG. 8 illustrates a block diagram 800 of the trust provider 112 server. As described above, the trust provider 112 server is configured to determine context based at least in part on the context data 110, provide invitation data 114, and establish a trust relationship between the user device and the content provider. The trust provider 112 server may comprise one or more processors 802, one or more memories 804, one or more displays 806, one or more input/output ("I/O") interfaces 808, and one or more network interfaces 810.

The processor 802 may comprise one or more cores and is configured to access and execute at least in part instructions stored in the one or more memories 804. The one or more memories 804 comprise one or more CRSM. The one or more memories 804 may include, but are not limited to, random access memory ("RAM"), flash RAM, magnetic media, optical media, and so forth. The one or more memories 804 may be volatile in that information is retained while providing power or non-volatile in that information is retained without providing power.

When present, the display 806 is configured to present visual information. The one or more I/O interfaces 808 may also be provided in the trust provider 112 server. These I/O interfaces 808 allow for coupling devices such as keyboards, external memories, and so forth to the trust provider 112 server.

The one or more network interfaces 810 provide for the transfer of data between the trust provider 112 server and another device using the one or more networks. The network interfaces 810 may include, but are not limited to, devices configured to couple to LANs, WLANs, WWANs, PANs, and so forth.

The one or more memories 804 may store code or program instructions for execution by the processor 802 to perform certain actions or functions. These instructions may include an operating system module 812 configured to manage hardware resources such as the I/O interfaces 808 and provide various services to applications executing on the processor 802. The one or more memories 804 may also store a datastore 814 containing information about the operating system module 812, context data 110, trust relationship(s) 816, invitation data 114, a whitelist 818, and other data 820.

The trust relationship 816 information describes one or more trust relationships which the trust provider 112 participates in. As described above with respect to FIG. 2, the trust relationship 816 may include the device trust relationships 202, the content trust relationships 204, the device-content provider trust relationships 206, and so forth.

The whitelist 818 provides information about particular user devices 102, users 104, or both which are approved to receive particular invitations. For example, the user devices 102(1)-(,3) may be explicitly approved to receive the invitations associated with the location 108(1). Should another user device 102(4) which does not appear in the whitelist 818 enter the location 108(1), that user device 102(4) would not receive an invitation.

In another implementation, a blacklist may be provided. The blacklist may specify particular user devices 102, users 104, or both which are denied particular invitations. For example, the user 104(4) and any user devices 102(4) associated with that user 104(4) may be explicitly denied the invitations associated with the location 108(2).

The one or more memories 804 may include a user interface module 822, the context determination module 116, the trust management module 118, and other modules 824. In some implementations one or more of these modules or their functions may be stored or executed on another device accessible using the network interface 810.

The user interface module 822 is configured to present information and accept user input. The user interface module 822 may provide graphical user interfaces, audible user interfaces, and so forth. For example, the user interface module 822 may provide a web interface configured to allow an administrator of the content provider 122 to establish a content trust relationship 204 with the trust provider 112,

As described above, the context determination module 116 processes at least a portion of the context data 110 and determines the context of the user device 102. The context of the user device 102 describes the environment or setting in which the user device 102 exists. This may be a physical environment, a functional environment, and so forth. For example, the physical environment describes the location of the user device 102, presence of other user devices 102, and so forth. The functional environment is indicative of the purpose of the user device 102, the users 104, or both. As described above with regard to FIG. 4, the calendar data 414 may be used to determine the context of the user device 102 is "in a meeting."

Based at least in part on the determined context, the trust management module 118 determines what invitation data 114 to send to the user device 102. In some implementations, the user device 102 may be determined to have more than one context at a time. For example, the user 104(1) who is attending the tradeshow at the location 108(1) may simultaneously have the context of "at tradeshow" and "in a meeting" when attending a special committee meeting at the tradeshow.

The trust management module 118 may compare one or more of the contexts of the user device 102 and provide a corresponding invitation data 114 to the user device 102, For example, the trust management module 118 may determine the invitation data 114(1) is associated with the context of "at tradeshow" and send that using the network interface 810 to the user device 102(1). As described above, the trust management module 118 may provide invitations to user devices 102 or users 104 based on context and on appearance in the whitelist 818.

The trust management module 118 may process the response from the user device 102(1). This response may indicate acceptance, rejection, or some other state associated with the invitation. Based at least in part on the acceptance of the invitation, the trust management module 118 may form the device-content provider trust relationship 206 between the user device 102 and the content provider 122. This relationship may be stored in the trust relationship 816 of the datastore 814.

FIG. 9 illustrates a block diagram 900 of the content provider 122 server configured to use the device-content provider trust relationship 206 to provide content 124 to the user device 102. The content provider 122 server may comprise one or more processors 902, one or more memories 904, one or more displays 906, one or more input/output ("I/O") interfaces 908, and one or more network interfaces 910.

The processor 902 may comprise one or more cores and is configured to access and execute at least in part instructions stored in the one or more memories 904. The one or more memories 904 comprise one or more CRSM. The one or more memories 904 may include, but are not limited to, random access memory ("RAM"), flash RAM, magnetic media, optical media, and so forth. The one or more memories 904 may be volatile in that information is retained while providing power or non-volatile in that information is retained without providing power,

When present, the display 906 is configured to present visual information. The one or more I/O interfaces 908 may also be provided in the content provider 122 server. These I/O interfaces 908 allow for coupling devices such as keyboards, external memories, and so forth to the content provider 122 server.

The one or more network interfaces 910 provide for the transfer of data between the content provider 122 server and another device using the one or more networks. The network interfaces 910 may include, but are not limited to, devices configured to couple to LANs, WLANs, WWANs, PANs, and so forth.

The one or more memories 904 may store code or program instructions for execution by the processor 902 to perform certain actions or functions. These instructions may include an operating system module 912 configured to manage hardware resources such as the I/O interfaces 908 and provide various services to applications executing on the processor 902, The one or more memories 904 may also store a datastore 914 containing information about the operating system module 912, content 124, trust relationship(s) 816, content management parameters 916, terms of use 504, and other data 918.

The content management parameters 916 describe restrictions or conditions on use or distribution of the content 124. The content management parameters 916 may be based at least in part on the terms of use 504 for a particular piece of content 124, content provider 122, or both. The content management parameters 916 are discussed in more detail below with regard to FIG. 10.

The one or more memories 904 may include a user interface module 920, a content distribution module 922, and other modules 924. In some implementations one or more of these modules or their functions may be stored or executed on another device accessible using the network interface 910.

The user interface module 920 is configured to present information and accept user input. The user interface module 920 may provide graphical user interfaces, audible user interfaces, and so forth. For example, the user interface module 920 may provide a web interface configured to allow the user 104 to select a particular piece of content 124.

The content distribution module 922 is configured to provide one or more pieces of the content 124 to the user device 102 or a storage location associated with the user device 102 for which the device-content provider trust relationship 206 has been established. For example, after acceptance of the invitation, the content distribution module 922 may establish communication with the user device 102 and send the content 124 using the network interlace 910. In another example, the user device 102 may store at least a portion of the content 124 in a storage location on a network. The content distribution module 922 may be configured to provide the content 124 to this storage location.

The content distribution module 922 may distribute the content 124 based at least in part on the corresponding content management parameters 916. For example, the content 124(1) may be provided to the user device 102 with a restriction that the content 124(1) is only available for the duration of the tradeshow at the location 108(1) and is non-transferrable to another user device 102,

FIG. 10 illustrates a block diagram 1000 of the content management parameters 916. As described above, the content management parameters 916 describe restrictions or conditions on use or distribution of the content 124, The content management parameters 916 may be used by the content distribution module 922, or provided to the user device 102 for use by the content presentation module 624.

The content management parameters 916 may include a content identifier 1002 used to associate a particular set of content management parameters with the appropriate piece of content 124. User preferences 1004 such as font size, preferred colors, and so forth may be included. For example, the user 104 may set a minimum font size of 12 points for text content 124 presented on the display.

Location access restrictions 1006 may be used to limit where the content 124 may be presented. For example, the content 124(1) associated with the tradeshow may be restricted to be presented on the user device 102 only when at the location 108(1).

Date/time access restriction 1008 may be specified such that the content 124 is available for presentation during particular dates, times, or both. For example, content 124(2) such as a company newsletter distributed at the location 108(2) may be accessible only during the lunch hour and outside of regular working hours.

Content distribution restrictions 1010 may be specified in the content management parameters 916 which limit the circumstances under which the content 124 may be transferred to another device. For example, the content 124(1) for the tradeshow may be limited to transfer to the user device 102 while prohibiting further transfers to any other user devices 102.

A content security level 1012 or other categorical designation may be provided. For example, the content 124 may be designated with a security level of "high" which may call for the content presentation module 624 on the user device 102 to biometrically identify the user 104 before presenting the data on the display 606.

Other 1014 parameters may also be included in the content management parameters 916. For example, hardware recommended for use when presenting the content 124 may be specified.

### ILLUSTRATIVE PROCESS

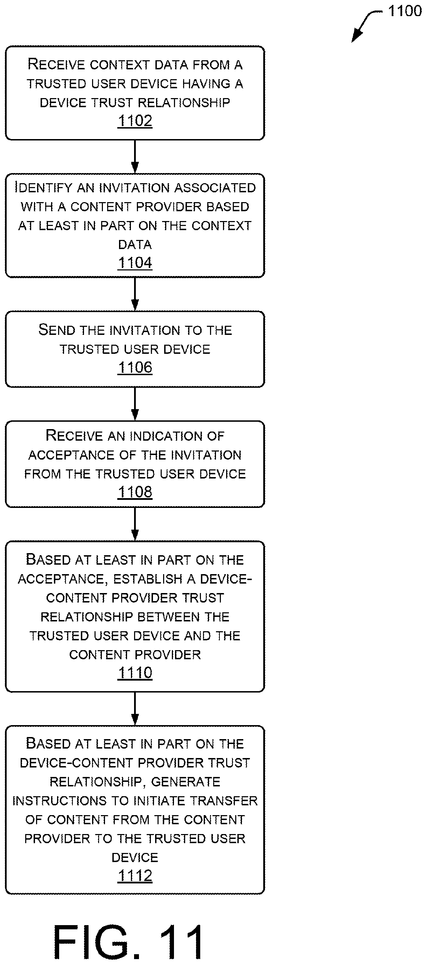

FIG. 11 illustrates a flow diagram 1100 of a process of providing an invitation based at least in part on the context data 110 and establishing the device-content provider trust relationship 206 based at least in part on acceptance of that invitation. This process may be implemented by one ot more of the user device 102, the trust provider 112 server, or the content provider 122 server.

Block 1102 receives context data 110 from the user device 102. The user device 102 may be a trusted user device, such that the device trust relationship 202 exists between the trust provider 112 and the user device 102. As described above with respect to FIG. 4, the context data 110 may describe a location of the trusted user device. This location may be a geographic location 402, a relative location 404, or both.

Block 1104 identifies an invitation associated with a content provider 122 based at least in part on the context data 110. As described above, the invitation data 114 for the invitation may comprise a description of content available from the content provider for distribution. For example, based on the context data 110 showing the user device 102(1) is at the location 108(1), the invitation data 114 for the tradeshow may be selected. The identification of the invitation may include comparing user identification or other attributes associated with the user device 102 with a pre-deterrnined list of one or more users approved to receive the invitation, such as the whitelist 818 described above.

As described above, the invitation may be associated with a physical location. For example, the invitation data 114(1) is associated with the location 108(1) of the tradeshow in the convention center. The identification of the invitation may include determining physical proximity of the user device 102 to the physical location based at least in part on the context data 110. For example, the geographic location 402 data may be used to ascertain that the user device 102 is in the convention center.

The invitation may also be associated with a location defined by a physical grouping of a plurality of user devices 102. For example, the location may be a group of users 104 in an aircraft having a meeting during the flight. The invitation may be determined by physical proximity of the plurality of user devices to one another, based at least in part on the context data 110. For example, these six user devices 102 which are within thirty feet of one another, share common calendar data 414, and appearing on a whitelist 818 may be associated with an invitation to share content sent by one of the users 104.

The invitation may also be associated with a particular a wireless network access point or wireless network. For example, the invitation data 114 may be for tourist guide content 124 and may be associated with a wireless network access point for a hotel lobby. The determining what invitation data 114 to provide to the user device 102 may include receiving the context data 110 with the detected adjacent wireless access points 406. Continuing the example, detection of the hotel lobby access point may thus be used to determine that the invitation data 114 for the tourist guide content 124 should be associated with the user device 102.

Block 1106 sends the invitation data 114 to the user device 102. For example, the trust provider 112 server may send the invitation data 114 to the user device 102 using the network interface 810.

Block 1108 receives an indication of acceptance of the invitation from the user device 102. For example, the user device 102 may send an acceptance packet to the trust provider 112 server using the network interface 610. In some implementations where there is a fee or cost associated with the content 124, the acceptance may include authorization of payment by the user, or a link or other reference to a payment portal.

Based at least in part on the acceptance, block 1110 establishes a device-content provider trust relationship 206 between the user device 102 and the content provider 122. In one implementation, the device-content provider trust relationship 206 may be established by providing one or more encryption credentials to the user device 102, the content provider 122, or both. These encryption credentials may then be used to establish an encrypted connection between the devices for the transfer of the content 124.

In another implementation, the device-content provider trust relationship 206 may be established by providing information identifying the user device 102 to the content provider 122; and providing information identifying the content provider 122 to the user device 102. For example, the trust provider 112 may send data to the content provider 122 which indicates a current network address and identifier of the user device 102. The trust provider 112 may also send data to the user device 102 which indicates a current network address and identifier of the content provider 122. The user device 102 or the content provider 122 may then attempt to establish communication, and that communication attempt may be validated by comparison to the information received from the trust provider 112.

As described above, the device-content provider trust relationship 206 may be with one or more user devices 102. For example, the user 104 may be associated with several user devices 102, and the device-content provider trust relationship 206 may be extended to these user devices 102. With the trust relationship in place, the user device(s) 102 and the content provider 122 have some assurance as to the information exchanged between them.

Based at least in part on the device-content provider trust relationship 206, block 1112 generates instructions to initiate transfer of content 124 from the content provider 122 server to the user device 102. The user device 102, the trust provider 112, or the content provider 122 may initiate the transfer. For example, the content provider 122 may receive the trust data 120 which contains network address information for the user device 102. Based on this network address information, the content provider 122 connects with the user device 102 and begins transferring the content 124. As described above, in some implementations, instead of, or in addition to transferring content to the user device 102, the content 124 may be provided to a network storage location accessible to the user device 102.

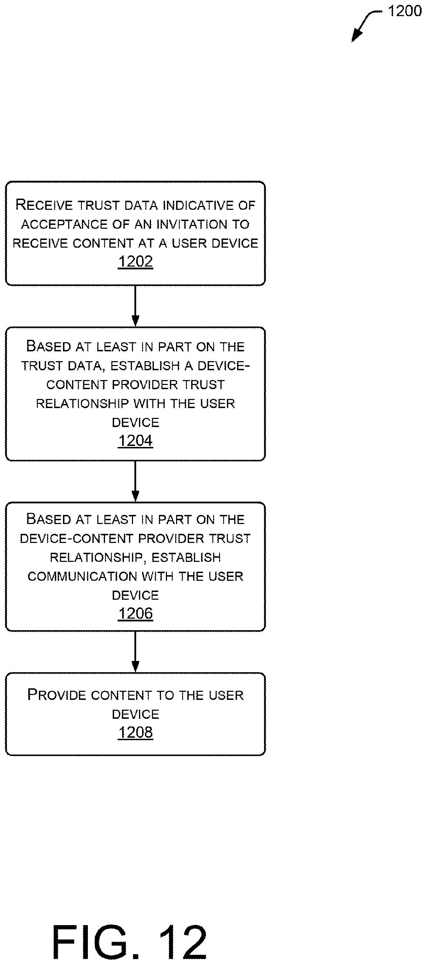

FIG. 12 illustrates a flow diagram 1200 of a process of providing content 124 to the user device 102 based at least in part on the device-content provider trust relationship 206. This process may be implemented by the content provider 122 server.

Block 1202 receives trust data 120 indicative of acceptance of an invitation to receive content 124 at the user device 102. As described above with regard to FIG. 5, the invitation data 114 may comprise a description of content available from a content provider 122 for distribution to the user device 102. The invitation data 114 may also be based at least in part on the location of the user device 102. The trust data 120 may be provided based at least in part on the acceptance by the user 104 of the invitation 106 described in the invitation data 114. The trust data 120 may be received from a trust provider 112 with which a content trust relationship 204 is maintained and which maintains a device trust relationship 202 with the user device 102.

Based at least in part on the trust data, block 1204 establishes a device-content provider trust relationship 206 between the content provider 122 and the user device 102. As described above with regard to FIG. 2, with the trust relationship in place, the user device 102 and the content provider 122 have some assurance as to the information exchanged between one another.

Based at least in part on the device-content provider trust relationship 206, block 1206 establishes a communication connection with the user device 102. In one implementation the trust provider 112 may be used to establish the communication connection between the user device 102 and the content provider 122. For example, the trust provider 112 may coordinate the exchange of network addresses and encryption keys between the two devices.

Block 1208 provides the content 124 to the user device 102. The user device 102, the trust provider 112, or the content provider 122 may initiate the transfer using the established communication connection.

### CONCLUSION

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, can be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that can direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, can be implemented by special-purpose, hardware-based computer systems that perform the specified functions, elements or steps, or combinations of special-purpose hardware and computer instructions.

Conditional language, such as, among others, "can," "could," "might, or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense only and not for purposes of limitation.

### CLAUSES

1. A computer-impiemerited method for utilizing processing resources of a computerized system, the computer-implemented method comprising:
   receiving context data from a trusted user device, wherein the context data includes information indicative of a location of the trusted user device;
   identifying, based at least in part on the information indicative of the location, an invitation associated with a trusted content provider, wherein the invitation includes information indicative of content available from the trusted content provider to the trusted user device at the location and information indicative to provide access to the content;
   sending the invitation to the trusted user device;
   receiving an indication of acceptance of the invitation from the trusted user device;
   based at least in part on the acceptance, establishing a trust relationship between the trusted user device and the trusted content provider; and
   based at least in part on the trust relationship, generating instructions configured to initiate transfer of content from the trusted content provider to the trusted user device.
2. The method of clause 1, the location comprising one or more of a geographic location, a relative location based at least in part on a description associated with the relative location, or a geographic or relative location at which one or more pre-determined devices are present.
3. The method of clause 1, wherein the information indicative to provide access to the content comprises a uniform resource identifier.
4. The method of clause 1, the context data further comprising information about an adjacent wireless access point detected by the trusted user device and wherein the identifying is further based at least in part on the information about the adjacent wireless access point.
5. The method of clause 1, the identifying the invitation further based at least in part on comparing user identification associated with the trusted user device with a pre-determined list of one or more users approved to receive the invitation.
6. A computer-implemented method for utilizing processing resources of a computerized system, the computer-implemented method comprising:
   receiving context data from a first user device associated with a user account;
   generating, based at least in part oil the context data, an invitation to receive content from a content provider;
   sending the invitation to the first user device or to a second user device also associated with the user account;
   receiving an indication of acceptance of the invitation from the first user device or the second user device; and
   based at least in part on the acceptance, establishing a trust relationship between the first user device and the content provider.
7. The method of clause 6, the establishing the trust relationship comprising providing one or more encryption credentials to the first user device, the content provider, or both.
8. The method of clause 6, the establishing the trust relationship comprising:
   providing information identifying the first user device to the content provider; and
   providing information identifying the content provider to the first user device.
9. The method of clause 6, the context data comprising one or more of:
   a geographic location,
   a relative location based at least in part on a function associated with the location,
   one or more detected adjacent wireless access points,
   one or more detected adjacent user devices,
   one or more detected adjacent near field communication devices, or
   wireless wide area network data.
10. The method of clause 6, the indication of acceptance comprising authorization of payment received from the first user device or the second user device.
11. The method of clause 6, wherein the context data comprises a physical location of the first user device and the generating is based at least in part on physical proximity of the first user device to a pre-determined physical location associated with the invitation.
12. The method of clause 6, wherein the context data comprises a physical location of the first user device and the generating is based at least in part on physical proximity of the first user device to a plurality of other user devices.
13. The method of clause 6, wherein the context data comprises an indication the first user device has detected a wireless network access point and the generating is based at least in part on the detected wireless network access point.
14. The method of clause 6, the generating further comprising comparing the user account with a list of user accounts authorized to receive the invitation.
15. The method of clause 6, the invitation comprising one or more of:
   a content description,
   terms of use,
   one or more payment requirements,
   content retrieval information, or
   content encryption parameters.
16. The method of clause 6, further comprising sending instructions to the first user device, the content provider, or both, wherein the instructions are configured to initiate a transfer of content from the content provider to the first user device based at least in part on the trust relationship.
17. The method of clause 6, further comprising, sending instructions to the content provider, wherein the instructions are configured to initiate a transfer of content from the content provider to a storage location accessible to the first user device using a network connection.
18. One or more computer-readable media storing computer-executable instructions that, when executed by at least one processor, configure the at least one processor to perform operations comprising:
   receiving trust data from a trust provider with which a content trust relationship is maintained and which maintains a device trust relationship with a user device, wherein the trust data is indicative of acceptance of an invitation to receive content at the user device and the invitation is based at least in part on a location of the user device;
   based at least in part on the trust data, establishing a device-content provider trust relationship with the user device; and
   based at least in part on the device-content provider trust relationship, establishing a communication connection with the user device.
19. The computer-readable media of clause 18, wherein the communication connection with the user device is established via the trust provider.
20. The computer-readable media of clause 18, the trust data comprising one or more of a user device identifier, a user identifier, or device connection information.
21. The computer-readable media of clause 18, further comprising providing, using the communication connection, content designated for access at the location of the user device.
22. The computer-readable media of clause 21, further comprising receiving payment information associated with providing the content.

## Claims

1. A computer-implemented method for utilizing processing resources of a computerized system, the computer-implemented method comprising the steps carried out by a computer of:
- receiving context data (110) from a first trusted user device (102) associated with a user account, wherein the context data (110) includes information indicative of a location of the first trusted user device (102);
- identifying, based at least in part on the information indicative of the location, an invitation associated with a trusted content provider (112), wherein the invitation includes information indicative of content available from the trusted content provider (112) to the first trusted user device (102) at the location and information indicative to provide access to the content;
- sending the invitation to the first trusted user device (102);
- receiving an indication of acceptance of the invitation from the first trusted user device (102);
- based at least in part on the acceptance, establishing a relationship between the first trusted user device (102) and the trusted content provider (112);
**characterized in that**
- the establishing the relationship comprises establishing a trust relationship between the first trusted user device (102) and the trusted content provider (112);
- the establishing the trust relationship comprises providing one or more encryption credentials to the first trusted user device (102), the trusted content provider (112), or both; and
- based at least in part in the trust relationship, generating instructions configured to initiate transfer of content from the trusted content provider (112) to the first trusted user device (102).

2. The method of claim 1, the location of the first trusted user device (102) comprising one or more of
- a geographic location,
- a relative location based at least in part on a description associated with the relative location, or
- a geographic or relative location at which one or more pre-determined devices are present.

3. The method of claim 1, the context data further comprising information about an adjacent wireless access point detected by the first trusted user device (102) and wherein the identifying is further based at least in part on the information about the adjacent wireless access point.

4. The method of claim 1, the identifying the invitation further based at least in part on comparing user identification associated with the first trusted user device (102) with a predetermined list of one or more users approved to receive the invitation.

5. The method of claim 1, the sending the invitation further comprising sending the invitation to a second user device.

6. The method of claim 1, the establishing the trust relationship comprising:
- providing information identifying the first trusted user device (102) to the trusted content provider (112), and
- providing information identifying the trusted content provider (112) to the first trusted user device (102).

7. The method of claim 1, the context data comprising one or more of:
- a relative location based at least in part on a function associated with the location,
- one or more detected adjacent user devices,
- one or more detected adjacent near field communication devices, or
- wireless wide area network data.

8. The method of claim 1, the indication of acceptance comprising authorization of payment received from the first trusted user device.

9. The method of claim 1, wherein the context data comprises a physical location of the first trusted user device (102) and the generating is based at least in part on physical proximity of the first trusted user device (102) to a pre-determined physical location associated with the invitation.

10. The method of claim 1, wherein the context data comprises a physical location of the first trusted user device (102) and the generating is based at least in part on physical proximity of the first trusted user device (102) to a plurality of other user devices.

11. The method of claim 1, wherein the context data comprises an indication the first trusted user device (102) has detected a wireless network access point and the generating is based at least in part on the detected wireless network access point.

12. The method of claim 1, the generating further comprising comparing the user account with a list of user accounts authorized to receive the invitation.

13. The method of claim 1, the generating instructions further comprising sending first instructions to the first trusted user device (102), the trusted content provider (112), or both, wherein the first instructions are configured to initiate a transfer of content from the trusted content provider to the first trusted user device (102) based at least in part on the trust relationship.

14. The method of claim 1, the generating instructions further comprising sending second instructions to the trusted content provider (112), wherein the second instructions are configured to initiate a transfer of content from the trusted content provider (112) to a storage location accessible to the first trusted user device (102) using a network connection.

15. A computer-readable medium having stored thereon instructions for causing processing resources of a computerized system to perform a method according to at least one of the preceding claims.

## Patentansprüche

1. Computerumgesetztes Verfahren zum Verwenden von Verarbeitungsressourcen eines computerisierten Systems, wobei das computerumgesetzte Verfahren die folgenden Schritte umfasst, die durch einen Computer ausgeführt sind:
- Empfangen von Kontextdaten (110) von einer ersten vertrauenswürdigen Benutzervorrichtung (102), die mit einem Benutzerkonto zusammenhängt, wobei die Kontextdaten (110) Informationen beinhalten, die einen Standort der ersten vertrauenswürdigen Benutzervorrichtung (102) angeben;
- Identifizieren, auf Grundlage von mindestens teilweise den Informationen, die den Standort angeben, einer Einladung, die mit einem vertrauenswürdigen Inhaltsanbieter (112) zusammenhängt, wobei die Einladung Informationen, die einen Inhalt angeben, der von dem vertrauenswürdigen Inhaltsanbieter (112) an die erste vertrauenswürdige Benutzervorrichtung (102) an dem Standort verfügbar ist, und Informationen beinhaltet, die ein Bereitstellen von Zugang zu dem Inhalt angeben;
- Senden der Einladung an die erste vertrauenswürdige Benutzervorrichtung (102);
- Empfangen einer Angabe einer Annahme der Einladung von der ersten vertrauenswürdigen Benutzervorrichtung (102);
- auf Grundlage von mindestens teilweise der Annahme, Aufbauen einer Beziehung zwischen der ersten vertrauenswürdigen Benutzervorrichtung (102) und dem vertrauenswürdigen Inhaltsanbieter (112);
**dadurch gekennzeichnet, dass**
- das Aufbauen der Beziehung ein Aufbauen einer Vertrauensbeziehung zwischen der ersten vertrauenswürdigen Benutzervorrichtung (102) und dem vertrauenswürdigen Inhaltsanbieter (112) umfasst;
- das Aufbauen der Vertrauensbeziehung ein Bereitstellen von einem oder mehreren Verschlüsselungszugangsdaten an die erste vertrauenswürdige Benutzervorrichtung (102), den vertrauenswürdigen Inhaitsanbieter (112) oder beide umfasst; und
- auf Grundlage von mindestens teilweise der Vertrauensbeziehung, ein Erzeugen von Anweisungen, die dazu konfiguriert sind, eine Übertragung von Inhalt von dem vertrauenswürdigen Inhaltsanbieter (112) an die erste vertrauenswürdige Benutzervorrichtung (102) einzuleiten.

2. Verfahren nach Anspruch 1, wobei der Standort der ersten vertrauenswürdigen Benutzervorrichtung (102) eines oder mehrere der Folgenden umfasst:
- einen geografischen Standort,
- einen relativen Standort, der mindestens teilweise auf einer Beschreibung beruht, die mit dem relativen Standort zusammenhängt, oder
- einen geografischen oder relativen Standort, an welchem sich eine oder mehrere vorbestimmte Vorrichtungen befinden.

3. Verfahren nach Anspruch 1, wobei die Kontextdaten ferner Informationen über einen benachbarten drahtlosen Zugangspunkt umfassen, der durch die erste vertrauenswürdige Benutzervorrichtung (102) detektiert ist, und wobei das Identifizieren ferner mindestens teilweise auf den Informationen über den benachbarten drahtlosen Zugangspunkt beruht.

4. Verfahren nach Anspruch 1, wobei das Identifizieren der Einladung ferner mindestens teilweise auf einem Vergleichen von einer Benutzeridentifizierung, die mit der ersten vertrauenswürdigen Benutzervorrichtung (102) zusammenhängt, mit einer vorbestimmten Liste von einem oder mehreren Benutzern beruht, denen Empfangen der Einladung genehmigt wurde.

5. Verfahren nach Anspruch 1, wobei das Senden der Einladung ferner ein Senden der Einladung an eine zweite Benutzervorrichtung umfasst.

6. Verfahren nach Anspruch 1, wobei das Aufbauen der Vertrauensbeziehung Folgendes umfasst:
- Bereitstellen von Informationen, die die erste vertrauenswürdige Benutzervorrichtung (102) identifizieren, an den Inhaltsanbieter (112), und
- Bereitstellen von Informationen, die den vertrauenswürdigen Inhaltsanbieter (112) identifizieren, an die erste vertrauenswürdige Benutzervorrichtung (102).

7. Verfahren nach Anspruch 1, wobei die Kontextdaten eines oder mehrere der Folgenden umfassen:
- einen relativen Standort, der mindestens teilweise auf einer Funktion beruht, die mit dem Standort zusammenhängt,
- eine oder mehrere detektierte benachbarte Benutzervorrichtungen,
- eine oder mehrere detektiere benachbarte Nahfeldkommunikationsvorrichtungen, oder
- drahtlose Weitverkehrsnetzdaten.

8. Verfahren nach Anspruch 1, wobei die Angabe einer Annahme das Autorisieren einer Zahlung umfasst, die von der ersten vertrauenswürdigen Benutzervorrichtung empfangen wurde.

9. Verfahren nach Anspruch 1, wobei die Kontextdaten einen physischen Standort der ersten vertrauenswürdigen Benutzervorrichtung (102) umfassen und das Erzeugen mindestens teilweise auf physischer Nähe der ersten vertrauenswürdigen Benutzervorrichtung (102) zu einem vorbestimmten physischen Standort beruht, der mit der Einladung zusammenhängt.

10. Verfahren nach Anspruch 1, wobei die Kontextdaten einen physischen Standort der ersten vertrauenswürdigen Benutzervorrichtung (102) umfassen und das Erzeugen mindestens teilweise auf physischer Nähe der vertrauenswürdigen Benutzervorrichtung (102) zu einer Vielzahl von anderen Benutzervorrichtungen beruht.

11. Verfahren nach Anspruch 1, wobei die Kontextdaten eine Angabe der ersten vertrauenswürdigen Benutzervorrichtung (102) umfassen, die einen drahtlosen Netzwerkzugangspunkt detektiert hat, und das Erzeugen mindestens teilweise auf dem detektierten drahtlosen Netzwerkzugangspunkt beruht.

12. Verfahren nach Anspruch 1, wobei das Erzeugen ferner ein Vergleichen des Benutzerkontos mit einer Liste von Benutzerkonten umfasst, die zum Empfangen der Einladung autorisiert sind.

13. Verfahren nach Anspruch 1, wobei das Erzeugen von Anweisungen ferner ein Senden von ersten Anweisungen an die erste vertrauenswürdige Benutzervorrichtung (102), den vertrauenswürdigen Inhaltsanbieter (112) oder beide umfasst, wobei die ersten Anweisungen dazu konfiguriert sind, eine Übertragung von Inhalt von dem vertrauenswürdigen Inhaltsanbieter zu der ersten vertrauenswürdigen Benutzervorrichtung (102) auf Grundlage von mindestens teilweise der Vertrauensbeziehung einzuleiten.

14. Verfahren nach Anspruch 1, wobei das Erzeugen von Anweisungen ferner ein Senden von zweiten Anweisungen an den vertrauenswürdigen Inhaltsanbieter (112) umfasst, wobei die zweiten Anweisungen dazu konfiguriert sind, eine Übertragung von Inhalt von dem vertrauenswürdigen Inhaltsanbieter (112) an einen Speicherort, der für die erste vertrauenswürdige Benutzervorrichtung (102) zugänglich ist, unter Verwendung einer Netzwerkverbindung einzuleiten.

15. Computerlesbares Medium, das Anweisungen darauf gespeichert aufweist, um die Verarbeitungsressourcen eines computerisierten Systems dazu zu veranlassen, ein Verfahren gemäß mindestens einem der vorhergehenden Ansprüche durchzuführen.

## Revendications

1. Procédé informatique pour utiliser les ressources de traitement d'un système informatisé, le procédé informatique comprenant les étapes, effectuées par un ordinateur, de :
- réception de données de contexte (110) d'un premier dispositif d'utilisateur de confiance (102) associé à un compte d'utilisateur, dans lequel les données de contexte (110) incluent des informations indicatives d'un emplacement du premier dispositif d'utilisateur de confiance (102) ;
- identification, basée au moins en partie sur les informations indicatives de l'emplacement, d'une invitation associée à un fournisseur de contenu de confiance (112), dans lequel l'invitation inclut des informations indicatives du contenu disponible auprès du fournisseur de contenu de confiance (112) au premier dispositif d'utilisateur de confiance (102) à l'emplacement et des informations indicatives pour fournir l'accès au contenu ;
- envoi de l'invitation au premier dispositif d'utilisateur de confiance (102) ;
- réception d'une indication d'acceptation de l'invitation en provenance du premier dispositif d'utilisateur de confiance (102) ;
- sur la base, au moins en partie, de l'acceptation, établissement d'une relation entre le premier dispositif d'utilisateur de confiance (102) et le fournisseur de contenu de confiance (112) ;
**caractérisé en ce que**
- l'établissement de la relation comprend l'établissement d'une relation de confiance entre le premier dispositif d'utilisateur de confiance (102) et le fournisseur de contenu de confiance (112) ;
- l'établissement de la relation de confiance comprend la fourniture d'un ou plusieurs identifiants de cryptage au premier dispositif d'utilisateur de confiance (102), au fournisseur de contenu de confiance (112), ou aux deux ; et
- sur la base, au moins en partie, de la relation de confiance, la génération d'instructions configurées pour débuter le transfert de contenu du fournisseur de contenu de confiance (112) au premier dispositif d'utilisateur de confiance (102).

2. Procédé selon la revendication 1, l'emplacement du premier dispositif d'utilisateur de confiance (102) comprenant un ou plusieurs
- d'un emplacement géographique,
- d'un emplacement relatif, basé au moins en partie sur une description associée à l'emplacement relatif, ou
- d'un emplacement géographique ou relatif sur lequel un ou plusieurs dispositifs prédéterminés sont présents.

3. Procédé selon la revendication 1, les données de contexte comprenant des informations sur un point d'accès sans fil adjacent détecté par le premier dispositif d'utilisateur de confiance (102) et dans lequel l'identification est en outre basée au moins en partie sur les informations relatives au point d'accès sans fil adjacent.

4. Procédé selon la revendication 1, l'identification de l'invitation étant en outre basée au moins en partie sur la comparaison de l'identification d'utilisateur associée au premier dispositif d'utilisateur de confiance (102) avec une liste prédéterminée d'un ou plusieurs utilisateurs approuvés pour recevoir l'invitation.

5. Procédé selon la revendication 1, l'envoi de l'invitation comprenant en outre l'envoi de l'invitation à un second dispositif d'utilisateur.

6. Procédé selon la revendication 1, l'établissement de la relation de confiance comprenant :
- la fourniture d'informations identifiant le premier dispositif d'utilisateur de confiance (102) au fournisseur de contenu de confiance (112), et
- la fourniture d'informations identifiant le fournisseur de contenu de confiance (112) au premier dispositif d'utilisateur de confiance (102).

7. Procédé selon la revendication 1, les données de contexte comprenant un ou plusieurs :
- d'un emplacement relatif basé au moins en partie sur une fonction associée à l'emplacement,
- d'un ou de plusieurs dispositifs d'utilisateur adjacents détectés,
- d'un ou de plusieurs dispositifs de communication en champ proche adjacents détectés, ou
- de données de réseau étendu sans fil.

8. Procédé selon la revendication 1, l'indication d'acceptation comprenant l'autorisation de paiement reçue du premier dispositif d'utilisateur de confiance.

9. Procédé selon la revendication 1, dans lequel les données de contexte comprennent un emplacement physique du premier dispositif d'utilisateur de confiance (102) et la génération est basée au moins en partie sur la proximité physique du premier dispositif d'utilisateur de confiance (102) avec un emplacement physique prédéterminé associé à l'invitation.

10. Procédé selon la revendication 1, dans lequel les données de contexte comprennent un emplacement physique du premier dispositif d'utilisateur de confiance (102) et la génération est basée au moins en partie sur la proximité physique du premier dispositif d'utilisateur de confiance (102) avec une pluralité d'autres dispositifs d'utilisateur.

11. Procédé selon la revendication 1, dans lequel les données de contexte comprennent une indication selon laquelle le premier dispositif d'utilisateur de confiance (102) a détecté un point d'accès au réseau sans fil et la génération est basée au moins en partie sur le point d'accès au réseau sans fil détecté.

12. Procédé selon la revendication 1, la génération comprenant en outre la comparaison du compte d'utilisateur avec une liste de comptes d'utilisateur autorisés à recevoir l'invitation.

13. Procédé selon la revendication 1, les instructions de génération comprenant en outre l'envoi de premières instructions au premier dispositif d'utilisateur de confiance (102), au fournisseur de contenu de confiance (112) ou aux deux, dans lequel les premières instructions sont configurées pour débuter un transfert de contenu du fournisseur de contenu de confiance vers le premier dispositif d'utilisateur de confiance (102) basé au moins en partie sur la relation de confiance.

14. Procédé selon la revendication 1, les instructions de génération comprenant en outre l'envoi de secondes instructions au fournisseur de contenu de confiance (112), dans lequel les secondes instructions sont configurées pour débuter un transfert de contenu du fournisseur de contenu de confiance (112) vers un emplacement de stockage accessible au premier dispositif d'utilisateur de confiance (102) en utilisant une connexion de réseau.

15. Support lisible par ordinateur ayant, stockées sur celui-ci, des instructions pour amener les ressources de traitement d'un système informatisé à exécuter un procédé selon au moins une des revendications précédentes.
